# EUROPEAN PATENT SPECIFICATION

(11) **EP 2 763 940 B1**
(45) Date of publication and mention of the grant of the patent: **05.09.2018**
(21) Application number: 12772475.5
(22) Date of filing: 27.08.2012
(51) Int. Cl.: C03C 1/00, C03C 10/12, C03B 32/02, C03C 3/097, C03B 19/02

(54) **A GLASS-CERAMIC MATERIAL AND ITS PRODUCTION METHOD**
GLAS -KERAMIK-MATERIAL UND VERFAHREN ZU SEINER HERSTELLUNG
MATIÈRE VITROCÉRAMIQUE ET SON PROCÉDÉ DE FABRICATION

(30) Priority: 03.10.2011 TR 201109768
(43) Date of publication of application: 13.08.2014
(73) Proprietor: Pinarci, Tamer, Istanbul (TR)
(72) Inventor: DOLEKCEKIC, Emrah, Eskisehir (TR)
(74) Representative: Dericioglu Kurt, Ekin
(86) International application number: PCT/IB2012/054383
(87) International publication number: WO 2013/050889

(56) References cited:
- US-A1- 2002 023 463
- US-A1- 2006 160 689
- DATABASE WPI Week 200764 Thomson Scientific, London, GB; AN 2007-681740 XP002689141, -& JP 2007 197310 A (NIPPON ELECTRIC GLASS CO) 9 August 2007 (2007-08-09)

## Description

### Technical Area

This invention is related with a glass-ceramic material and production method thereof wherein glass ceramics with low expansion coefficient are produced ecologically.

### Prior art

Glass- ceramics can be obtained by controlled crystallisation of special designed glasses. These glass- ceramics are highly crytallised materials which have higher mechanical strength, impact resistance and resistance to high temperatures and lower thermal expansion coefficient compared with their glass equivalents. They can be widely used for electrical insulation, kitchenware, dental applications, implants and space research.

Nowadays, lithium- alumina- silicate (LAS) glass ceramics are highly popular due to having high transparency and thermal shock resistance. LAS glass- ceramics have two important crystalline phases, β-quartz solid solution (Li₂O-Al₂O₃-2SiO₂) and β-spodumen (Li₂O-Al₂O₃-4SiO₂). Having one of these phases in the glass-ceramic material could increase the chemical resistance and decrease the thermal expansion coefficient. These glass- ceramics exhibit also high thermal shock resistance and transparency. For that reason, they can find wide number of applications in indusry. However, during the processing of these glass- ceramics, especially in the melting section, some of the oxides used (As₂O₃, Sb₂O₃ and PbO etc.) evoparate easily and pollute the environment. For that reason, it is necessary to find alternative eco- friendly methods and oxides to these harmfull ingredients.

In one of the known technique to produce these glass- ceramics which have low thermal expansion coefficient and high transparency and convenient to use in optical area was documented in US patent number of US5336643. In this glass-ceramic composition, the amount of the main ingredients similar to Al₂O₃, SiO₂ and P₂O₅ were decreased and some amounts of MgO, BaO and ZnO were added. Additionally, as an alternative oxide of P₂O₅ and nucleating agent of TiO₂ and ZrO₂ were also used in this composition.

In another technical document of US6060412 US patent, there is a crystallised glass- ceramic material which was shaped by tension method. Crystal size in this glass- ceramic material was less than 5µm. Amount of crytals in this material is between 10- 85% and changin with controlled crystallisation. Additionally, softening temperature of this material is below its melting temperature.

In another application of transparent product of glass- ceramic material was mentioned in Russion patent of RU2170715. According to this invention, glass-ceramic products were produced with an ecological technic which is environmentally friendly. Additionally, products can be used in ceramic and aviation industry. JP2007197310 A teaches a LAS glass-ceramic comprising 1.7 wt% P2O5, 0.5 wt% B2O5, as well as SiO2, A12O3, Li2O and further components.

US2002023463 A1 discloses a LAS glass-ceramic production method comprising the steps of batch preparation, melting, batch compensation, refining, shaping, and ceramization, whereby the glass-ceramic comprises SiO2, A12O3, Li2O and further components and fining agents are added during the melting stage.

### Summary of the Invention

The aim of this invention is to provide an ecological glass-ceramic material and production method thereof which does not pollute nature and in which alternative oxides are used instead of harmful oxides.

Another aim of this invention is to provide a glass-ceramic material wherein resistance of the product is enhanced and which has high thermal shock resistance, and production method thereof.

### Detailed Explanation of the Invention

To achieve the aim of this invention, "a glass- ceramic material and its production method" is illustrated in the attached figure;

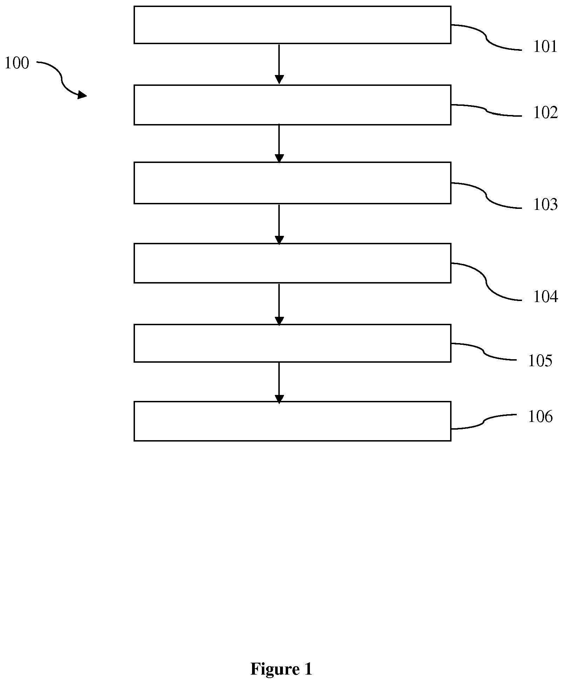

**Figure 1****.** Flow chart of the production method of the glass- ceramic material of the invention.

"A glass-ceramic material production method" (100) developed to achieve the aim of the invention is comprised of the following steps;
- batch preparation of raw material composition (101),
- melting (102),
- batch compensation for final composition (103),
- removal of gas bubbles (refining) (104),
- shaping process (105),
- ceramization (106).

In the content of the final product produced with the glass-ceramic material production method (100) of the present invention, there are high quartz solid solution phase(s) which enable the glass-ceramic to have high strength and thermal shock resistance. The amount of the said phases should not be less than 70%. To produce a glass-ceramic material having these properties, first of all, raw material batch preparation has to be done (101). This composition is prepared by a plurality of oxides comprising of SiO₂, Al₂O₃, Li₂O, Na₂O, K₂O, BaO, CaO, ZnO, TiO₂, ZrO₂, MgO.

Total batch composition is subjected to melting process (102) in special glass melting furnaces which are resistant to high temperatures and alkali containing solutions and are produced by high quality refractory materials containing silicon and zirconium. Temperature inside the furnace, in this step, varies between 1550 and 1700°C depending on the composition of glass.

Along with the melting (102) procedure, 0.5-5% B₂O₃ and 0.1-2.5% P₂O₅ by weight are added to the batch composition to compensate and obtain the final composition (103). At the end of this step, the final composition will contain: 60- 70% SiO₂, 15-25% Al₂O₃, 0.5- 5% B₂O₃, 3- 8% Li₂O, 0.5- 2% Na₂O, 0.1- 0.8% K₂O, 0.1- 1.5% BaO, 0- 0.5% CaO, 1-2.5% ZnO, 1- 4% TiO₂, 1- 4% ZrO₂, 0.1-2.5% P₂O₅ and 0-0.5% MgO by weight.

B₂O₃, which is added at the step of batch compensation to final composition (103), decreases the viscosity of the mixture and enables to remove the gas bubbles (refining) (104). The gas bubbles of bigger size move fast within the melt, reach the surface and leave the melt from there. However, since the smaller gas bubbles move much slower in viscous melt, they may get trapped in the final product if not intervened. Presence of these gas bubbles is undesirable since they decrease the strength of the final product. Addition of B₂O₃ also causes ceramization temperature of the mixture to decrease to 500-700°C. Ceramization (106) performed at low temperatures is undesirable as it causes the properties of the final product to change in time during usage of it. Usually, service temperature of glass- ceramic products for stove tops is between 400- 600°C. During the step of compensation for the final composition (103), addition of P₂O₅ increases the decreasing ceramization temperature.

In the step of refining (removal of gas bubbles) (104), use of P₂O₅ and B₂O₃ together enables both to remove gas bubbles and to adjust the temperature suitable for the ceramization process (106).

The glass paste molten under high temperatures is then subjected to shaping process (105). Shaping process (105) can be performed with very different methods such as blowing, casting- roller, drawing and floating.

The glass that is shaped is subjected to ceramization (106) in the next stage. The purpose of this process is to form a fine grained structure and accordingly to improve strength and wear resistance of the final product. Ceramization process (106) takes place between 800-950°C over a period of 5- 24 hours.

SiO₂, which is used in the scope of the invention, enables to obtain glass-ceramic phases and increases the strength of final product.

Al₂O₃ in the composition provides the properties of low thermal expansion and content β-quartz solid solution phases and increases the strength of glass.

Li₂O is a part of structure of β-quartz solid solution. Also, it facilitates melting during melting (102) of the glass ceramic and thereby forms a low viscosity liquid. This in turn increases the homogeneity of the melt.

Na₂O, K₂O, CaO and BaO are added to improve the melting behaviour of glasses. However, these additives increase the residual glass phase amount in the final product of glass-ceramics. For that reason, their amount has to be limited.

B₂O₃ is used to remove the gas bubbles that are formed in the glass-creamic during the melting process. B₂O₃ decreases the viscosity of melt which increases the speed of the gas bubbles to the surface. This way, since the glass will contain much less imperfections when it becomes final product, it will have a higher strength.

TiO₂ and ZrO₂ are used together as a mixture to enable rapid nucleation and to increase efficiency in the process. Nucleation and transparency depends on TiO₂/ZrO₂ ratio.

Control of nuclei formation and grain growth which constitute two important steps of the ceramization (106) can be determined by high temperature X-ray diffraction equipment within short time and in an efficient way.
Results obtained with this equipment have shown that B₂O₃ coming from the borax raw material (Na₂B₄O₇.10H₂O) used in the invention decreases the ceramization (106) temperature to lower degrees. However, as a known fact, ceramization (106) temperature below 800°C is not preferred. For that reason, P₂O₅ is added to the mixture to increase the optimum crystallization temperatures above the said value. As a known fact, presence of P₂O₅ increases the amount of crystal formation and increases the crystal formation temperatures to high degrees.

Under the light of these basic concepts, it is possible to develop various embodiments of the inventive glass-ceramic material and its production method (100). The invention can not be limited with these given examples and it is essentially as defined in the claims.

## Claims

1. A glass-ceramic material production method (100) **comprising** the steps of
- batch preparation of raw material composition (101),
- melting (102),
- batch compensation for final composition (103),
- removal of gas bubbles (refining) (104),
- shaping process (105),
- ceramization (106);
**characterized by** the steps of
- raw material preparation (101) wherein a plurality of oxides comprising of SiO₂, Al₂O₃, Li₂O, Na₂O, K₂O, BaO, CaO, ZnO, TiO₂, ZrO₂ and MgO are used,
- batch compensation for final composition (103) wherein 0.5-5% B₂O₃ coming from the borax raw material, Na₂B₄O₇·10H₂O, and 0.1-2.5 P₂O₅ by weight are added to said raw material composition during melting (102) following the preparation of the raw material composition (101) such that at the end of this step (103) the final composition will contain 60-70% SiO₂, 15-25% Al₂O₃, 0.5-5% B₂O₃, 3-8% Li₂O, 0.5-2% Na₂O, 0.1-0.8% K₂O, 0.1-1.5% BaO, 0-0.5% CaO, 1-2.5% ZnO, 1-4% TiO₂, 1-4% ZrO₂, 0.1-2.5% P₂O₅ and 0-0.5% MgO by weight, and
- removal of the gas bubbles (104) wherein both the bubbles are removed and the temperature suitable for ceramization (106) process is adjusted by joint use of P₂O₅ and B₂O₃ compounds.

2. A glass-ceramic material production method (100) according to Claim 1, **characterized by** the step of melting (102) wherein the raw material composition is processed within special glass furnaces of 1550 - 1700°C which are resistant to high temperatures and alkali containing solutions, and are produced by high quality refractory materials containing silicon and zirconium.

3. A glass-ceramic material production method (100) according to any of the preceding claims, **characterized by** the step of ceramization (106) which is performed at 800-950°C over a period of 5-24 hours and which improves strength and wear resistance of the final product.

4. A glass-ceramic material production method (100) according to any of the preceding claims, **characterized by** the step of batch preparation of raw material composition (101) wherein SiO₂ enables to obtain glass-ceramic phases and increases the strength of final glass-ceramic product.

5. A glass-ceramic material production method (100) according to any of the preceding claims, **characterized by** the step of batch preparation of raw material composition (101) wherein Al₂O₃ provides the properties of low thermal expansion and transparency and high strength to the final glass-ceramic product.

6. A glass-ceramic material production method (100) according to any of the preceding claims, **characterized by** the step of batch preparation of raw material composition (101) wherein Li₂O facilitates melting of the glass ceramic and increases the homogeneity during melting step (102) and thereby forms a low viscosity liquid.

7. A glass-ceramic material production method (100) according to any of the preceding claims, **characterized by** the step of batch preparation of raw material composition (101) wherein Na₂O, K₂O, CaO and BaO improve the melting behaviour of glass-ceramic.

8. A glass-ceramic material production method (100) according to any of the preceding claims, **characterized by** the step of batch preparation of raw material composition (101) wherein B₂O₃ decreases the viscosity of melt which increases the speed of the gas bubbles to the surface and provides high strength to the final glass-ceramic product since the glass will contain much less imperfections.

9. A glass-ceramic material production method (100) according to any of the preceding claims, **characterized by** the step of batch preparation of raw material composition (101) wherein TiO₂ and ZrO₂ are present together to enable rapid nucleation and to increase efficiency in the process.

10. A glass-ceramic material production method (100) according to any of the preceding claims, **characterized by** the step of batch preparation of raw material composition (101) wherein P₂O₅ is added to the mixture to increase the crystallization temperature above 800°C since ceramization (106) temperature below the said value is not preferred.

## Patentansprüche

1. Verfahren (100) zur Herstellung von Glaskeramik umfassend die Schritte
- der Batch-Vorbereitung von Rohmaterialzusammensetzung (101),
- des Schmelzens (102),
- des Batch-Ausgleiches für die endgültige Zusammensetzung (103),
- des Entfernens von Gasblasen (Verfeinern)(104),
- des Formprozesses (105),
- der Keramisierung (106);
**gekennzeichnet durch** die Schritte der
- Rohmaterialvorbereitung (101) wobei eine Mehrzahl von Oxide umfassend SiO₂, Al₂O₃, Li₂O, Na₂O, K₂O, BaO, CaO, ZnO, TiO₂, ZrO₂ und MgO verwendet sind,
- des Batch-Ausgleiches für die endgültige Zusammensetzung (103), wobei gew.0.5-5% B2O3 aus Borrohmaterial kommt, Na₂B₄O₇.10H₂O, und 0.1-2.5 P₂O₅ zu der Rohmaterialzusammensetzung während des Schmelzens (102) nach der Herstellung der Rohmaterialzusammensetzung (101) zugegeben sind sodass am Ende dieses Schrittes (103) die endgültige Zusammensetzung gew. 60-70% SiO₂, 15-25% Al₂O₃, 0.5-5% B₂O₃, 3-8% Li₂O, 0.5-2% Na₂O, 0.1-0.8% K₂O, 0.1-1.5% BaO, 0-0.5% CaO, 1-2.5% ZnO, 1-4% TiO₂, 1-4% ZrO₂, 0.1-2.5% P₂O₅ und 0-0.5% MgO beinhaltet und
- des Entfernens von Gasblasen (104) wobei sowohl die Blasen entfernt sind und die für die Keramisierung (106) geeignete Temperatur durch gemeinsame Verwendung von P₂O₅ und B₂O₃-Verbindungen eingestellt ist.

2. Verfahren (100) zur Herstellung von Glaskeramik nach Anspruch 1, **gekennzeichnet durch** den Schritt des Schmelzens (102), wobei in der Rohmaterialzusammensetzung in speziellen Glasöfen von 1550-1700°C verarbeitet wird, die gegenüber hohen Temperaturen und alkalihaltigen Lösungen beständig sind, und die durch hochwertige feuerfeste Materialien, die Silicium und Zirkonium enthalten, hergestellt werden.

3. Verfahren (100) zur Herstellung von Glaskeramik nach einem der vorangehenden Ansprüche, **gekennzeichnet durch** den Schritt der Keramisierung (106), die in einem Zeitraum von 5- 24 Stunden bei 800- 950°C durchgeführt wird und die Festigkeit und Verschleißfestigkeit des Endprodukts verbessert.

4. Verfahren (100) zur Herstellung von Glaskeramik nach einem der vorangehenden Ansprüche, **gekennzeichnet durch** den Schritt der Batch-Vorbereitung der Rohmaterialzusammensetzung (101), wobei SiO₂ das Erhalten von glaskeramischen Phasen ermöglicht und die Festigkeit des endgültigen Glaskeramik-Produkts verbessert.

5. Verfahren (100) zur Herstellung von Glaskeramik nach einem der vorangehenden Ansprüche, **gekennzeichnet durch** den Schritt der Batch-Vorbereitung der Rohmaterialzusammensetzung (101), wobei Al₂O₃ dem endgültigen Glaskeramikprodukt geringe Wärmeausdehnung und Durchsichtigkeit und hohe Festigkeit bietet.

6. Verfahren (100) zur Herstellung von Glaskeramik nach einem der vorangehenden Ansprüche, **gekennzeichnet durch** den Schritt der Batch-Vorbereitung der Rohmaterialzusammensetzung (101), wobei Li₂O das Schmelzen der Glaskeramik erleichtert und die Homogenität während des Schrittes von Schmelzen (102) erhöht und dadurch eine Flüssigkeit mit niedriger Viskosität bildet.

7. Verfahren (100) zur Herstellung von Glaskeramik nach einem der vorangehenden Ansprüche, **gekennzeichnet durch** den Schritt der Batch-Vorbereitung der Rohmaterialzusammensetzung (101), wobei Na₂O, K2O, CaO und BaO das Schmelzverhalten der Glaskeramik verbessern.

8. Verfahren (100) zur Herstellung von Glaskeramik nach einem der vorangehenden Ansprüche, **gekennzeichnet durch** den Schritt der Batch-Vorbereitung der Rohmaterialzusammensetzung (101), wobei B₂O₃ die Viskosität der Schmelze verringert, was die Geschwindigkeit der Gasblasen an die Oberfläche erhöht und dem fertigen Glaskeramikprodukt eine hohe Festigkeit verleiht, da das Glas viel weniger Defekte enthalten wird.

9. Verfahren (100) zur Herstellung von Glaskeramik nach einem der vorangehenden Ansprüche, **gekennzeichnet durch** den Schritt der Batch-Vorbereitung der Rohmaterialzusammensetzung (101), wobei TiO₂ und ZrO₂ zusammen vorliegen, um eine schnelle Keimbildung zu ermöglichen und die Effizienz in dem Prozess zu erhöhen.

10. Verfahren (100) zur Herstellung von Glaskeramik nach einem der vorangehenden Ansprüche **gekennzeichnet durch** den Schritt der Batch-Vorbereitung der Rohmaterialzusammensetzung (101) wobei P₂O₅ dem Gemisch zugesetzt ist, um die Kristallisationstemperatur über 800°C zu erhöhen, da eine Keramisierungstemperatur (106) unterhalb des genannten Wertes nicht bevorzugt ist.

## Revendications

1. Procédé de production de matériau en vitrocéramique (100) comprenant les étapes consistant à
- préparation par lots de la composition de matière première (101),
- fusion (102),
- compensation par lots pour la composition finale (103),
- élimination des bulles de gaz (raffinage) (104),
- procédé de mise en forme (105),
- céramisation (106);
**caractérisé par** les étapes consistant à
- préparation de matière première (101) dans laquelle une pluralité d'oxydes comprenant du SiO₂, Al₂O₃, Li₂O, Na₂O, K₂O, BaO, CaO, ZnO, TiO₂, ZrO₂ et MgO sont utilisés,
- compensation par lots pour la composition finale (103) dans laquelle 0.5-5% de B₂O₃ proviennent de la matière première de borax, Na₂B₄O₇·10H₂O, et 0.1-2.5 de P₂O₅ en poids sont ajoutés à ladite composition de matière première lors de la fusion (102) suite à la préparation de la composition de matière première (101) de telle sorte qu'à la fin de cette étape (103), la composition finale contienne 60-70% de SiO₂, 15-25% de Al₂O₃, 0.5-5% de B₂O₃, 3-8% de Li₂O, 0.5-2% de Na₂O, 0.1-0.8% de K₂O, 0.1-1.5% de BaO, 0-0.5% de CaO, 1-2.5% de ZnO, 1-4% de TiO₂, 1-4% de ZrO₂, 0.1-2.5% de P₂O₅ et 0-0.5% de MgO en poids, et
- l'élimination des bulles de gaz (104) dans laquelle les deux bulles sont éliminées et la température appropriée pour le processus de céramisation (106) est ajustée par l'utilisation conjointe de P₂O₅ et de composés B₂O₃.

2. Procédé de production de matériau en vitrocéramique (100) selon la revendication 1, **caractérisé par** l'étape de fusion (102) dans laquelle la composition de matière première est traitée dans des fours de verre spéciaux de 1550-1700°C résistants à des températures élevées et à des solutions alcalines, et fabriqués par des matériaux réfractaires de haute qualité contenant du silicium et du zirconium.

3. Procédé de production de matériau en vitrocéramique (100) selon l'une quelconque des revendications précédentes, **caractérisé par** l'étape de céramisation (106) qui est réalisée à 800-950°C sur une période de 5-24 heures et qui améliore la résistance et l'usure résistance du produit final.

4. Procédé de production de matériau en vitrocéramique (100) selon l'une quelconque des revendications précédentes, **caractérisé par** l'étape de préparation par lots de la composition de matière première (101) dans laquelle SiO₂ permet d'obtenir des phases vitrocéramiques et augmente la résistance du produit vitrocéramique final.

5. Procédé de production de matériau en vitrocéramique (100) selon l'une quelconque des revendications précédentes, **caractérisé par** l'étape de préparation par lots de la composition de matière première (101) dans laquelle Al₂O₃ fournit les propriétés de faible dilatation thermique et de transparence et de haute résistance au produit vitrocéramique final.

6. Procédé de production de matériau en vitrocéramique (100) selon l'une quelconque des revendications précédentes, **caractérisé par** l'étape de préparation par lots de la composition de matière première (101) dans laquelle Li₂O facilite la fusion de la vitrocéramique et augmente l'homogénéité pendant l'étape de fusion (102) et forme ainsi un liquide de faible viscosité.

7. Procédé de production de matériau en vitrocéramique (100) selon l'une quelconque des revendications précédentes, **caractérisé par** l'étape de préparation par lots de la composition de matière première (101) dans laquelle Na₂O, K₂O, CaO et BaO améliorent le comportement à la fusion de la vitrocéramique.

8. Procédé de production de matériau en vitrocéramique (100) selon l'une quelconque des revendications précédentes, **caractérisé par** l'étape de préparation par lots de la composition de matière première (101) dans laquelle B₂O₃ diminue la viscosité de la masse fondue qui augmente la vitesse des bulles de gaz vers la surface et fournit une résistance élevée au produit vitrocéramique final puisque le verre contiendra beaucoup moins d'imperfections.

9. Procédé de production de matériau en vitrocéramique (100) selon l'une quelconque des revendications précédentes, **caractérisé par** l'étape de préparation par lots de la composition de matière première (101) dans laquelle TiO₂ et ZrO₂ sont présents ensemble pour permettre une nucléation rapide et augmenter l'efficacité dans le procédé.

10. Procédé de production de matériau en vitrocéramique (100) selon l'une quelconque des revendications précédentes, **caractérisé par** l'étape de préparation par lots de la composition de matière première (101) dans laquelle du P₂O₅ est ajouté au mélange pour augmenter la température de cristallisation au-dessus de 800°C étant donné qu'une température de céramisation (106) inférieure à ladite valeur n'est pas préférée.
